# EUROPEAN PATENT APPLICATION

(11) **EP 2 933 661 A1**
(43) Date of publication of application: **21.10.2015**
(21) Application number: 15163626.3
(22) Date of filing: 15.04.2015
(51) Int. Cl.: G01V 3/08

(54) **Ultra-long electromagnetic source**

(30) Priority: 17.04.2014 US 201461981164 P; 02.12.2014 US 201414557598
(71) Applicant: PGS Geophysical AS, 0216 Oslo (NO)
(72) Inventor: Lindqvist, Ulf Peter, 141 72 Segeltorp (SE)
(74) Representative: Skone James, Robert Edmund

(57) **Abstract**

An electromagnetic source. At least some illustrative embodiments are electromagnetic sources including a first electrode (136) and a second electrode (138). The electromagnetic source also includes a cable (135) disposed between the first electrode and the second electrode. The second electrode (138) separated from the first electrode (136) by the length L, and the length L of the cable (135) between the electrodes in the range from 1000 meters to 20000 meters (20 kilometers).

## Description

### BACKGROUND

Marine survey systems are used to acquire data (e.g. seismic data, electromagnetic data, etc.) regarding Earth formations below a body of water such as a lake or ocean. Many marine survey systems use one or more sensor streamers towed behind a vessel. Other marine survey systems locate sensors on or near the ocean bottom (i.e. sea floor) on cables or nodes. Some sensors detect one or more parameters associated with an electromagnetic source.

Electromagnetic sources with short lengths (e.g. smaller than the offset between the source and the sensors) carry large currents in the cable between source electrodes making such cables expensive and bulky.

### BRIEF DESCRIPTION OF THE DRAWINGS

For a detailed description of exemplary embodiments, reference will now be made to the accompanying drawings in which:
Figure 1 shows an overhead view of a marine survey system in accordance with at least some embodiments;
Figure 2 shows a side elevation view of a marine survey system in accordance with at least some embodiments;
Figure 2A shows an overhead view of a marine survey system in accordance with at least some embodiments.
Figure 3 shows an overhead view of a marine survey system in accordance with at least some embodiments;
Figure 4 shows relative target response for model sources in accordance with at least some embodiments;
Figure 5 shows graphs of electric field intensity for model sources in accordance with at least some embodiments;
Figure 5A shows a portion of the graphs of electric field intensity of Figure 5 in further detail; and
Figure 6 shows a flow chart of a method in accordance with at least some embodiments.

### NOTATION AND NOMENCLATURE

Certain terms are used throughout the following description and claims to refer to particular system components. As one skilled in the art will appreciate, different companies may refer to a component by different names. This document does not intend to distinguish between components that differ in name but not function. In the following discussion and in the claims, the terms "including" and "comprising" are used in an openended fashion, and thus should be interpreted to mean "including, but not limited to...." Also, the term "couple" or "couples" is intended to mean either an indirect or direct connection. Thus, if a first device couples to a second device, that connection may be through a direct connection or through an indirect connection via other devices and connections.

"Offset" shall mean a distance between an electromagnetic source and a sensor of a sensor array. Offset shall be measured from an electrode of the electromagnetic source nearest the sensor to the mid-point of the sensor.

"Target nearest offset" shall mean an offset between an electromagnetic source and a nearest (to the electromagnetic source) sensor of a sensor array, where the offset is greater than a predetermined survey depth.

"Sensor array" shall mean a plurality of sensors disposed on one or more sensor streamers, ocean bottom cables, and/or nodes.

"Ultra-long" as used herein in the context of separation of electrodes of an electromagnetic source shall mean a length greater than or equal to the target nearest offset.

"Predetermined survey depth" shall mean a depth below a sea floor of a formation targeted for survey.

A parameter recited to be "in the range from [recited range]" shall mean that the parameter can be any value within the recited range inclusive of the boundaries defining the range.

"Exemplary," as used herein, means serving as an example, instance, or illustration." An embodiment described herein as "exemplary" is not necessarily to be construed as preferred or advantageous over other embodiments.

### DETAILED DESCRIPTION

The following discussion is directed to various embodiments of the invention. Although one or more of these embodiments may be preferred, the embodiments disclosed should not be interpreted, or otherwise used, as limiting the scope of the disclosure or the claims. In addition, one skilled in the art will understand that the following description has broad application, and the discussion of any embodiment is meant only to be exemplary of that embodiment, and not intended to intimate that the scope of the disclosure or the claims, is limited to that embodiment.

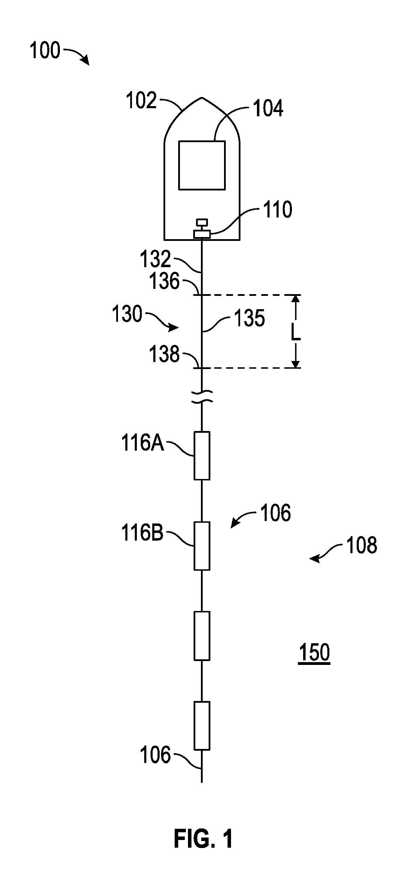

Figure 1 shows an overhead view of a marine survey system 100 in accordance with at least some embodiments. In particular, Figure 1 shows a survey vessel 102 having onboard equipment 104, such as navigation, energy source control, and data recording equipment. Survey vessel 102 is configured to tow at least one sensor streamer 106 through the water 150. The sensor streamer 106 may couple to the onboard equipment 104 by electrical and/or optical connections between the appropriate components in the onboard equipment 104 and the sensors (e.g. 116A, 116B) in the sensor streamer 106. Sensor streamer 106, and its sensors 116, thus forms a sensor array 108. Sensor streamer 106 may be of any length used in sensor streamers in electromagnetic surveys. In some cases, the sensor streamer 106 may have a length of about 8000 meters as measured starting at the survey vessel 102, but the first sensor 116 may be positioned at least about 2000 meters from the survey vessel 102. In some embodiments, marine survey system 100 may include seismic sources and/or seismic sensors.

In at least some embodiments, sensors 116 may be pairs of sensor electrodes disposed at spaced apart positions along the sensor streamer 106. In other examples, each sensor 116 is a one-dimensional electrical field sensor configured to be most sensitive to electric fields aligned with the direction of travel of the survey vessel 102 (or stated otherwise, most sensitive to electric field polarizations aligned with the longitudinal axis of the sensor streamer 106). Moreover, sensors 116 may include magnetic field sensors in place of, or in addition to, the electric field sensors. For example, a single axis or multi-axis magnetometer, such as a flux gate magnetometer, may be used in place of or in combination with electric field sensors. In yet still other cases, the sensors 116 may be sensors that sense the combination of electric and magnetic fields. While sensor streamer 106 is shown to have four sensors 116 so as not to unduly complicate the figure, in actual use the sensor streamer 106 may have as many as fifty or more sensors 116. Regardless of the type of sensors used, the sensors detect at least a portion of the electromagnetic fields imparted by an electromagnetic source.

In some embodiments, the survey vessel 102 also tows an electromagnetic source 130 (hereafter just source 130) by way of cable bundle 132. The source 130 may comprise two electrodes 136 and 138 (e.g. metal plates) towed inline with the sensor streamer 106. In the illustrated embodiment, the cable bundle 132 comprises two electrically insulated cables, and thus the electrical conductors of each insulated cable are electrically insulated from each other and from the surrounding water 150. Both insulated cables may be mechanically coupled to the first electrode 136, and one insulated cable is electrically coupled to the first electrode 136. The second insulated cable 135 of the cable bundle 132 may be disposed between the first and second electrodes and is both mechanically and electrically coupled the second electrode 138. It follows that the towing force applied to the first electrode 136 may be carried by one or both the insulated cables of the cable bundle 132, and the towing force for the second electrode 138 is carried by the insulated cable 135. The separation of the electrodes 136 and 138 is thus defined by the length L of the insulated cable 135 between the electrodes 136 and 138. In some cases the length *L* may be greater than or equal to a predetermined survey depth, which may be a kilometer or more. In other cases the length *L* exceeds a target nearest offset (defined above). In example systems, the length *L* is in the range from about 1000 meters and 20000 meters (20 kilometers), and in yet other example systems in the range from about 2000 meters and 10000 meters (10 kilometers). In specific example systems, the length *L,* and thus the separation between the electrodes 136 and 138, may be about 4000 meters. As would be understood by one of ordinary skill in the art with the benefit of this disclosure, source 130 may be towed in a crossline configuration, wherein electrodes 136 and 138 are separated laterally (perpendicular to the survey path). In such embodiment, cable bundle 132 may branch to apply the towing force to each of electrodes 136 and 138, while insulated cable would extend laterally between electrodes 136 and 138.

The source 130 may be activated by driving a direct current (DC) amperage between the electrodes 136 and 138 with the circuit being completed through the water. In some cases, the amperage driven between the electrodes 136 and 138 is in the range from few hundred amps to 1000 amps (A), and more particularly in the range from 100 A and 500 A. In a particular embodiment, during activation the DC current flow may be time-varying, for example, the direction of the DC current flow may be reversed periodically (e.g. at a frequency in the range from about 0.01 Hertz (Hz) to about 10 Hz). In other embodiments, the DC current flow may be switched on and off periodically at similar frequencies. In still other embodiments, DC current flow switching (either unipolar or bipolar) may occur in a preselected sequence, such as a pseudorandom binary sequence. In yet other embodiments, a continuous wave alternating current (AC) current flow at a frequency in the range from about 0.01 Hz to about 10 Hz may be used. In still other embodiments a continuous wave alternating current with a combination of sinusoidal waves of different frequencies may be used. In at least some embodiments the frequency of the time-varying current may be in the range from about 0.01 Hz to about 5 Hz, and in yet other embodiments in the range from about 0.01 Hz to 2 Hz. Thus, in some embodiments, source 130 activation may be considered to be periods of time when a low frequency AC signal is applied to the electrodes 136 and 138. In some cases, the source 130 is activated for an extended period of time, for example 100 seconds or more. With movement of the survey vessel 102 taken into account, a source 130 activation of 100 seconds may correspond to 200 to 300 meters of distance traveled. During periods of time when the source 130 is activated and shortly thereafter, onboard equipment 104 may record data associated with one or more sensors 116. Onboard equipment 104 may also include power supplies and switching circuitry for supplying the driving current to the electrodes 136 and 138 of the source 130.

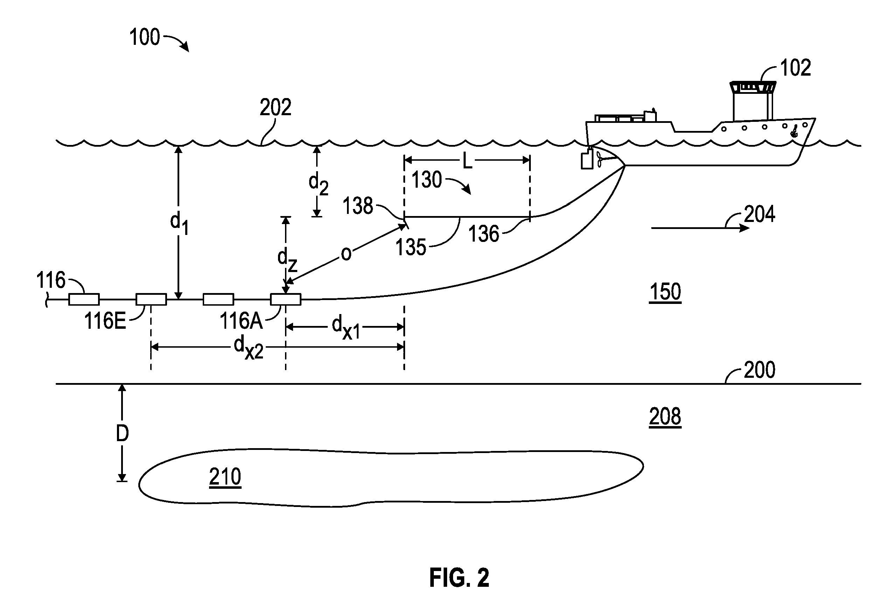

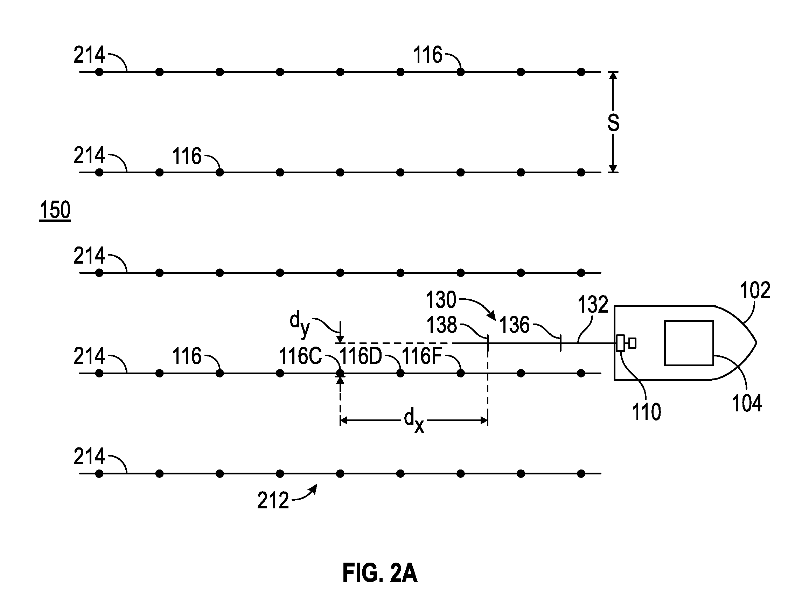

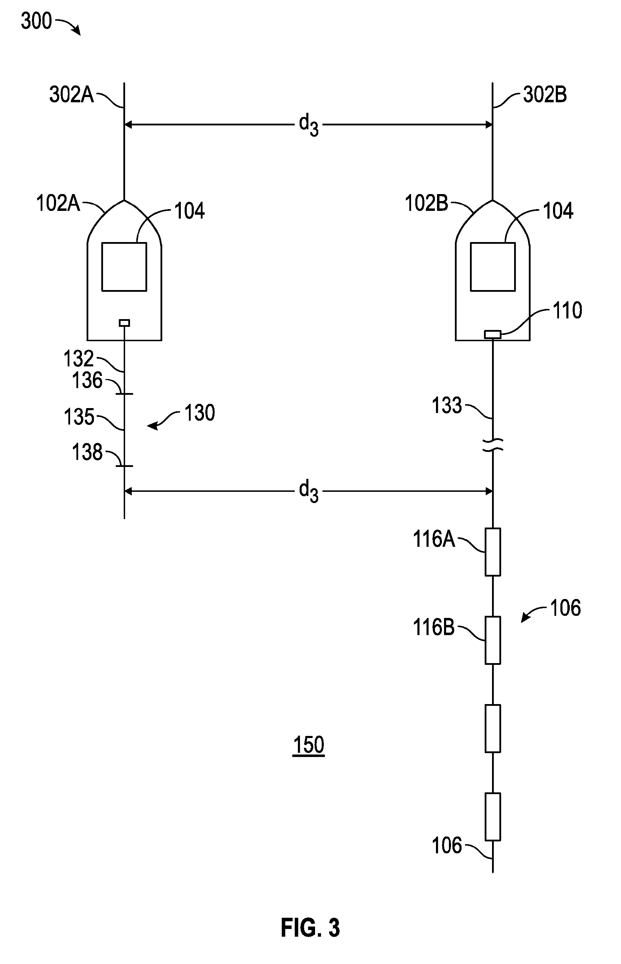

Figure 2 shows a side view of the marine survey system 100 in order to convey further concepts. In particular, Figure 2 shows the survey vessel 102 towing sensor streamer 106 along with the source 130. In some cases, the sensor streamer 106 is towed at a depth d₁ of about 100 meters, but other depths are possible based on the predetermined survey depth. For example, in some embodiments, depth d₁ may be in the range from about 100 meters to about 2000 meters. In some embodiments, the depth d₁ may vary along the length of sensor streamer 106. The source 130 is illustrated as towed at a particular depth d₂ below the surface 202 of the water 150 but more shallow than the sensor streamer 106. In some embodiments, the depth d₂ may extend from the surface of the water to about 10 meters. However, the source 130 may be towed at any suitable depth or location, above or below (i.e. deeper than) the sensor streamer 106. In other embodiments, the source may be towed alongside the sensor streamer, as described below in conjunction with Figure 3, or the sensor streamer may be attached behind the source.

In example systems the length of sensor streamer 106 may be about 8000 meters or longer and the first sensor 116 may be positioned about 2000 meters from survey vessel 102. Thus, in at least some embodiments in which the separation of the electrodes 136 and 138 is in the range from 1000 meters and 20000 meters (20 kilometers), at least a portion of sensors 116 may have a horizontal offset component that is greater than, in some cases much greater than, the vertical offset component represented by the difference between d₁ and d₂. Other sensor configurations are possible. For example, sensors 116 may be disposed on ocean bottom cables or nodes, as described further below in conjunction with Figure 2A. As another example, sensors 116 may be disposed on one or more sensor streamers towed by a separate vessel, as described further below in conjunction with Figure 3. Moreover, sensors 116 may be disposed on additional sensor streamers towed by survey vessel 102.

Regardless of the sensor configuration, the offset *O* between source 130 and a sensor 116 may have a vertical component, a horizontal component, or both. More specifically, offset *O* may comprise a combination of horizontal components (dₓ, d_{y}) (dy not shown in FIG 2) and a vertical component (d_{z}) such that the offset *O* = ((dₓ)² + (d_{y})² + (d_{z})²)^{1/2}.

With regard to the determining the offset *O*, consider as an example sensor array 212 as shown in Figure 2A. Sensor array 212 may comprise one or more ocean bottom cables 214 disposed on or near the sea floor 200 (Figure 2). The offset *O* regarding source 130 with respect to an example sensor 116C may be comprised of horizontal components dₓ and d_{y} (in the plane of the page) as shown. The offset *O* may further comprise a vertical component d_{z} (perpendicular to the plane of the page of Figure 2A) where the vertical component d_{z} is the difference between the depth of the sensor 116C on the ocean bottom cable 214 and the depth of source 130. The offset *O* with respect to sensor 116C is then determined as *O* = ((dₓ)² + (d_{y})² + (d_{z})²)^{1/2}. In contrast to sensors 116D and 116F, sensor 116C may be responsive to a reservoir at a predetermined survey depth such that the offset *O* is a "target nearest offset." Stated otherwise, sensors may be responsive to a reservoir when the offset *O* for each sensor is greater than or equal to the predetermined survey depth, and in some cases the sensors are responsive to a reservoir at an offset *O* is in the range from 2 - 4 times the predetermined survey depth. For offsets *O* less than the predetermined survey depth (such as the offsets for sensors 116D and 116F), sensor response may be dominated by direct path signals travelling between the source 130 the sensor.

Referring again to Figure 2, the electrical currents driven between the electrodes of the source 130 complete a circuit through the water 150, which in many cases is saline and thus electrically conductive. An electromagnetic field induced by the source 130 travels through water 150 to sea floor 200 and into formation 208 beneath sea floor 200. Formation 208 reacts back on the electromagnetic field in accordance with the electrical properties of the formation. In particular, when reservoir 210 contains hydrocarbons, the electrical resistivity of the reservoir 210 may be higher (i.e. electrical conductivity lower) than a permeable saline-bearing material of formation 208. Again, if the offset between source 130 and a particular sensor is greater than the depth of the reservoir 210 beneath the sea floor 200, the responsive electromagnetic field from the reservoir 210 may dominate the electromagnetic energy directly transmitted to particular sensor from the source 130. The resistivity contrast between the reservoir 210 as compared to a permeable, saline-bearing formation 208 may assist in the identification of subsurface hydrocarbon reservoirs.

In cases such as Figure 2 where the sensor array is made up of a sensors 116 carried on a towed sensor streamer 106, the offset between source 130 and at least some sensors of the sensor streamer 106 can be controlled to account for the predetermined survey depth. For example, previously run seismic surveys may establish a predicted depth D of a fluid-bearing reservoir 210 beneath the sea floor 200, but the seismic survey may not be able to discern the type of fluid within the reservoir 210. In order to determine the type of fluid (e.g. saline versus hydrocarbons), an electromagnetic survey may be performed. Knowing or even a reasonable estimate of the depth D, the offset between the source 130 and at least some of the sensors can be controlled such that for at least some of the sensors the offset is greater than or equal to the depth D. In a particular example, the equipment of the marine survey system 100 is selected and assembled such that nearest sensor 116A to the source 130 is controlled to be greater than or equal to the depth D, such as by trailing sensor streamer 106 further behind the source 130 (or vice-versa) to achieve the target nearest offset. In this way, all the sensors 116 of a sensor streamer 106 will be responsive to the reservoir 210, but again having all the sensors with offsets greater than or equal to the predetermined survey depth is not required.

In cases where the sensors 116 are disposed on ocean-bottom cables or nodes, the distance between the source electrodes 136, 138 and any particular sensor 116 varies as the survey vessel and source travel past the ocean-bottom cables, or nodes. Thus, the offset between the source and a particular sensor 116 also varies. However, in the course of the survey the offset between the source and a particular sensor may increase to the point that the offset is greater than the predetermined survey depth.

A "target nearest offset" refers to an offset between the source 130 and a particular sensor such that the offset is comparable to or greater than the depth of reservoir under investigation. Stated otherwise, the "target nearest offset" refers to an offset of the electromagnetic source 130 to a sensor 116 (measured from the electrode 136,138 nearest the sensor to the mid-point of the sensor) such that the offset is equal to or greater than a predetermined survey depth. By way of example, considering first a towed sensor streamer 106 as in Figure 2, for a particular reservoir 210 depth D, the target nearest offset may comprise the distance dx1 between the mid-point of sensor 116A and electrode 138. However, for a deeper reservoir, that is a reservoir whose depth exceeds D, the offset between sensor 116A and source 130 based on the horizontal distance dx1 may not be sufficient to reach the target nearest offset. In this example, the target nearest offset may be between sensor 116E and source 130 based on the horizontal distance dx2 between the mid-point of sensor 116E and electrode 138. By way of example in the case of sensors 116 disposed in ocean-bottom cables, or nodes, as described in conjunction with Figure 2A, the offset of sensor 116C may be the target nearest offset. The specification now turns to considerations of separation of the electrodes of the source 130.

In a shallow reservoir 210, the signal arising from the aforesaid resistivity contrast may be significant, resulting in a large signal-to-noise ratio (SNR). As the depth of the reservoir 210 below the sea floor 200 increases, the signal may diminish with the SNR concomitantly diminishing as well. The reduced SNR may complicate the detection of a deep hydrocarbon reservoir. The SNR may be increased by increasing the strength of source 130. However, increasing the strength of a source 130 is subject to constraints, for example, the insulated cable 135 between the electrodes should be neutrally buoyant in sea water, consequently, the insulated cable 135 should not be too large or dense.

The strength of a source 130 may also be determined by the current moment (*M*). Current moment *M* is defined as the product of the electrical current (*I*) driven between the electrodes having a separation of length *L,* and thus for current moment *M = I*L*. The strength of a source 130 may be increased by increasing either the current *I*, or the length *L.* In conventional, related-art marine survey systems, the length *L* is bounded by the offset to satisfy a dipole approximation. That is, related-art systems limit the length *L* to be smaller than the shortest offset such that the source satisfies the dipole approximation. In related-art marine survey systems that limit the length *L* to achieve the dipole approximation, increasing the source strength implies increasing the current *I* which may then involve introducing a bulky and expensive insulated cable 135 to carry the electrical current to be driven between the electrodes.

Conversely, in a marine survey system incorporating an ultra-long electromagnetic source in accordance with the principles disclosed herein, a reduction of the electrical current may allow a smaller insulated cable 135 and a reduction in surface size of the source electrodes, or prolonged lifetime of the source electrodes, or both. Considering the electrode size, for example, source electrodes may deliver a current density in the range from about 100 amperes per meter-squared (A/m²) to 500 A/m², depending on the electrode material, with a reasonable lifetime. Thus, for a given source electrode current density, lower currents may provide for smaller electrode sizes.

In accordance with the principles disclosed herein, the length *L* need not be constrained to be smaller than the shortest offset in a marine survey system, and thus an ultra-long electromagnetic source may be used. In at least some embodiments, the length *L* of the insulated cable 135 is in the range from 1000 meters and 20000 meters (20 kilometers). As will be described further below, it turns out that sensor responses at a particular offset and at a particular current moment *M* may be similar for: a) a source whose length *L* is less than the particular offset (i.e. the related-art condition for marine survey systems); and b) an ultra-long electromagnetic source embodying the principles of the disclosure.

In a marine survey system based on an ultra-long electromagnetic source, a preselected value of current moment *M* may be obtained with a lower value of driving current *I*. Thus, for example, by increasing the length *L* of the source 130 by a factor of five, the driving current *I* may be reduced by a factor of five for the same value of current moment *M*. However, the lower current *I* may be carried in an insulated cable 135 having a concomitantly reduced cross-sectional area (and since cable bundle 132 incorporates insulated cable 135, cable bundle 132 is likewise reduced in cross-sectional area). In such an insulated cable 135, the voltage drop for a given value of current moment *M* is increased proportionally. However, in a marine survey system, power may be delivered at high voltage, for example a few kilovolts. In a related-art marine survey system using a source having a length less than the shortest offset, a step-down transformer may be used to drop the voltage and increase the drive current to the desired value. In a marine survey system based on an ultra-long electromagnetic source in accordance with the disclosed principles, the step-down transformer may be reduced in size or omitted, thus simplifying the power system at depth. In at least some embodiments, the reduction in drive current may permit moving all the power electronics onboard the survey vessel and eliminating source electronics at depth. Example systems may have preselected values of current moment in the range from 250,000 amp-meters to 25,000,000 amp-meters. Other example systems may have preselected values of current moments in the range from 500,000 amp-meters to 25,000,000 amp-meters.

As previously described, at least some offsets between the source 130 and the sensors 116 may be based on a predetermined survey depth. In a configuration in which the source and sensor streamer are towed by the same survey vessel, control of the offsets might only be obtained with respect to a portion of the sensors comprising the sensor streamer. Stated otherwise, only a portion of the sensors in the sensor streamer, namely those towards the distal end (relative to the survey vessel) of the sensor streamer might be responsive to the detection of the reservoir. An additional degree of freedom in the offset of the source and sensor streamer, and thereby predetermined survey depth, may be had by employing separate survey vessels for the source and sensor streamer. An illustrative marine survey system 300 in accordance with such an embodiment is shown in Figure 3. Survey vessel 102A is configured to tow source 130 via cable bundle 132. Similar to marine survey system 100, electromagnetic source 130 may include two electrodes 136 and 138 spaced apart along the insulated cable 135. Source 130 may also be driven as described in conjunction with marine survey system 100. Survey vessel 102B may be configured to tow sensor streamer 106 through the water 150 via cable 133. Sensor streamer 106 may comprise one or more sensors 116 as described in conjunction with Figure 1. Each survey vessel 102A, 102B also may include onboard equipment 104 similar to marine survey system 100.

Survey vessels 102A and 102B may be deployed along respective survey paths 302A and 302B with a lateral separation providing a lateral distance, dy, between source 130 and sensor streamer 106. In this way, one part of the horizontal component of the offset between electromagnetic source 130 and sensor streamer 106 may be obtained. The other part of the horizontal component of the offset, dx, may be obtained as in Figure 2. The distance dy may be selected to achieve a desired offset of source 130 and sensors 116 of sensor streamer 106 for particular depths of tow d₁ and d₂ (not shown in Figure 3) of sensor streamer 106 and source 130, respectively. In other words, the horizontal component of the offset may be selected to achieve a desired offset for a given vertical offset component determined by the difference of d₁ and d₂ by choosing the separation distance dy accordingly. Further, in at least some embodiments, multiple sources may be used, wherein each survey vessel may separately tow a source. Offsets may be determined with respect to each source, and each source may have a respective target nearest offset.

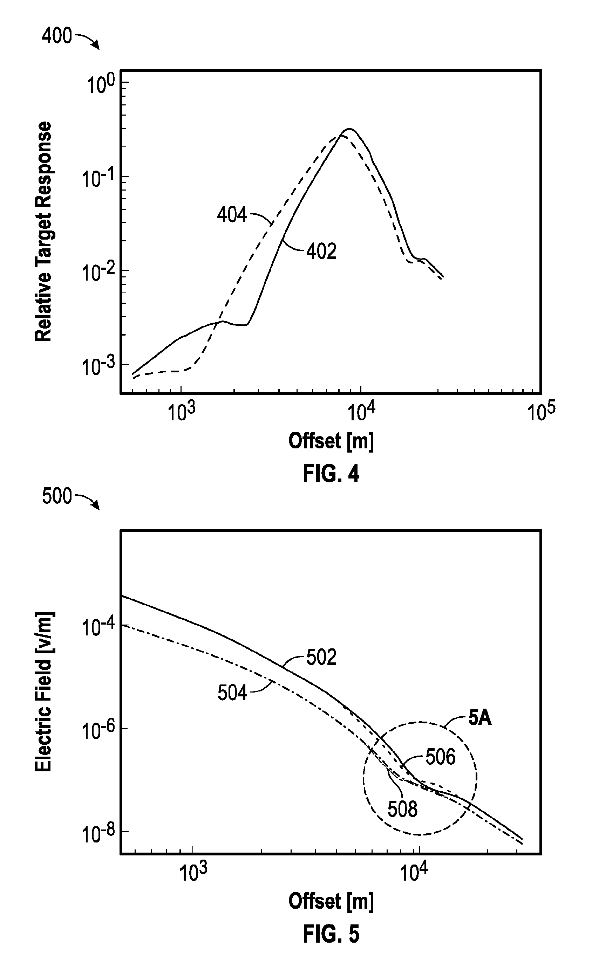

To further appreciate source 130 having an ultra-long length in accordance with the disclosed principles, turn now to Figure 4, illustrating an exemplary graph 400 of the relative target response for two sources based on a computer simulation model using the GREEN3D software from the Consortium for Electromagnetic Modeling and Inversion (CEMI), University of Utah, Salt Lake City, UT. The simulation treats the source as a bi-pole (i.e. a two-electrode source) and does not make the dipole approximation in which the separation of the electrodes is less than the offset. The relative target response may be determined from the signal in the presence of a resistive layer representing in the simulation a subsurface hydrocarbon reservoir relative to the signal in the absence of a resistive layer. That is, the relative target response, *T_{R},* may be determined as *T_{R} =* (*E_{T} - E_{NT}*)/*E_{NT},* where *E_{T}* is the electric field in the presence of a target and *E_{NT}* the electric field in the absence of a target. In at least some embodiments, a lower bound for detection of a target may be a *T_{R}* in the range from 0.05 - 0.1 (a dimensionless value). The lengths of the two sources used in the simulation were 800 meters and 4000 meters. The drive electrical current used in the simulation for the 800 meter source was 2500 A. The drive electrical current for the 4000 meter source was 500 A. The sensor depth (d1 in Figure 2) was set at 100 meters, and source depth (d₂ in Figure 2) at 10 meters. The depth of the sea floor 200 was set at 300 meters below the surface 202 of water 150 and the target depth below the sea floor 200 was set to 2000 meters. Curve 402 (solid line) is a plot of the relative target response for the shorter, 800 meter, source as a function of the offset. Similarly, curve 404 (dash line) is a plot of the relative target response for the 4000 meter, ultra-long electromagnetic source. As seen in Figure 4, the relative target responses for the two sources are of similar amplitude. In particular, for offsets greater than about 5000 meters where both the 800 meter source and the 4000 meter source may be less than the offset, the relative target responses for the sources are seen to track closely. Further, in the region of offsets between about 1500 meters and about 4000 meters, where the 800 meter source is substantially less than the offsets and the 4000 meter source may be considered ultra-long, the relative target response for the 4000 meter source is larger than that for the 800 meter source.

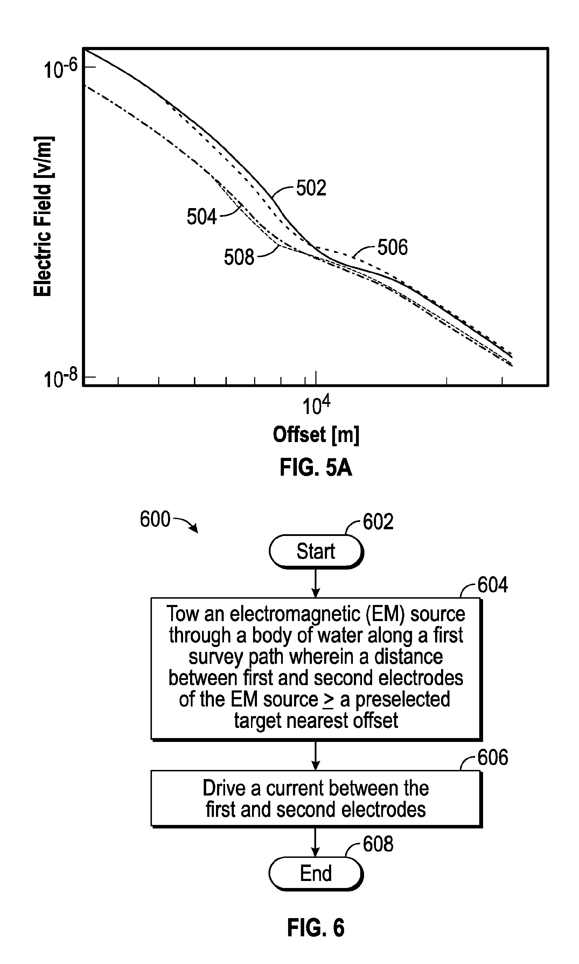

The relative parity of the 800 meter source and 4000 meter source in the simulations described in conjunction with Figure 4 may also be seen in graph 500 of electric field strength in Figure 5. In graph 500, the electric field strength, in volts/meter (V/m), is plotted as a function of offset, in meters. Graph 500 includes the electric field strengths for both the 800 meter source in the presence of and in the absence of a target. However, but for small deviations described below, the electric field strengths in the presence of and absence of a target are too small to be seen on the scale of the Figure 5. Curve 502 (solid) plots the electric field strength for the 800 meter source as a function of the offset, in meters, in the presence of a target. Curve 504 (dash-dots) is a corresponding plot of the electric field strength for the 4000 meter source. For the 800 meter source in the presence of a target. For offsets between approximately 5000 meters and 9100 meters, the electric field strength with no target falls slightly below the electric field strength with a target, then transitions to rise slightly above the electric field strength with a target for offsets in the range of approximately 9100 meters to 13 kilometers, curve portion 506 (dashes). Similar behavior is seen for the electric field strengths for the 4000 meter source in the absence of a target, curve portion 508 (dots). However, the transition occurs for an offset of approximately 8000 meters. Although, the electric field strength in the simulation may, in at least some embodiments, be seen to be less for the 4000 meter than the 800 meter source over a portion of the range of offsets, the electric field strengths are of similar amplitude. Figure 5A shows a portion of the graphs of electric field strengths of Figure 5 in further detail.

To further appreciate the foregoing, refer now to Figure 6 showing a flowchart of a method 600 for a electromagnetic survey. Method 600 starts in block 602, and in block 604 an electromagnetic source is towed through a body of water along a first survey path. The electromagnetic source may be comprised of first and second electrodes having a distance, *L,* there between greater than or equal to a preselected target nearest offset. In at least some embodiments, *L* may be in the range from 1000 meters to 20000 meters (20 kilometers) and in some embodiments, the preselected target nearest offset may be in the range from 2000 meters to 10000 meters (10 kilometers). In some embodiments, L may be about 4000 meters. A current is driven between the first and second electrodes, block 606. In at least some embodiments, the current, *I*, driven between the first and second electrodes generates a preselected value of a current moment, *M = I*L*, at the distance, *L* between the first and second electrodes. In some embodiments, the current may be less than 500 amps. In at least some embodiments, the preselected value of the current moment may be in the range of 250,000 amp-meters to 5,000,000 amp-meters. Method 600 ends at block 608.

In accordance with an embodiment of the invention, a geophysical data product may be produced. The geophysical data product may include geophysical data from a survey conducted using an ultra-long electromagnetic source and may be stored on a non-transitory, tangible, computer-readable medium. The geophysical data product may be produced offshore (i.e. by equipment on a survey vessel) of onshore (i.e. at a facility on land) either within the United States or another country. If the geophysical data product is produced offshore or in another country, it may be imported onshore to a facility in the United States. Once onshore, in the United States, geophysical analysis may be performed on the geophysical data product.

References to "one embodiment", "an embodiment", "a particular embodiment", and "some embodiments" indicate that a particular element or characteristic is included in at least one embodiment of the invention. Although the phrases "in one embodiment", "an embodiment", "a particular embodiment", and "some embodiments" may appear in various places, these do not necessarily refer to the same embodiment.

The above discussion is meant to be illustrative of the principles and various embodiments of the present invention. Numerous variations and modifications will become apparent to those skilled in the art once the above disclosure is fully appreciated. For example, each sensor streamer 106 may comprise multiple individual sections electrically and mechanically coupled end-to-end to form each overall sensor streamer 106. It is intended that the following claims be interpreted to embrace all such variations and modifications.

## Claims

1. An apparatus comprising:
an electromagnetic source comprising:
a first electrode;
a second electrode;
a cable disposed between the first electrode and the second electrode, and the cable having a length L between the electrodes;
the second electrode separated from the first electrode by the length L; and
the length L of the cable between the electrodes in the range from 1000 meters to 20000 meters (20 kilometers).

2. The apparatus of claim 1, wherein:
the cable is configured to carry an electrical current *I*, and wherein:
the electric current generates a preselected value of current moment *M,* where *M = I*L,;* and
the electric current has a frequency in the range from 0.01 Hz to10 Hz, and wherein the preselected value of current moment is preferably in the
range from 250,000 amp-meters to 25,000,000 amp-meters.

3. The apparatus of claim 1 or claim 2, further comprising a sensor array having a plurality of sensors, wherein the cable length L exceeds a target nearest offset between the electromagnetic source and a sensor of the sensor array, and wherein the target nearest offset is preferably in the range from 2000 meters to 10000 meters (10 kilometers).

4. The apparatus of claim 3, wherein:
the electromagnetic source is coupled to a first survey vessel, the first survey
vessel when deployed having a first survey path;
the sensor array is coupled to a second survey vessel, the second survey vessel when deployed having a second survey path,
wherein the first and second survey paths have a lateral distance there between; and,
wherein a component of the target nearest offset comprises the lateral distance.

5. The apparatus of any of the preceding claims, wherein the cable length L exceeds a predetermined survey depth.

6. A method comprising:
towing an electromagnetic source through a body of water along a first survey path, wherein the electromagnetic source comprises a first electrode and a second electrode having a distance therebetween and,
wherein the distance is equal to or greater than a target nearest offset; and
driving an electric current between the first electrode and the second electrode.

7. The method of claim 6, wherein the target nearest offset comprises a distance between the first survey path and a sensor of a sensor array, the method further comprising:
towing the sensor array through the body of water, the towing along a second survey path, the sensor array comprising a plurality of sensors;
detecting, by the sensor array, at least a portion of electromagnetic fields imparted by the electromagnetic source;
wherein the first survey path and the second survey path have a lateral distance therebetween, and
wherein a component of the target nearest offset comprises the lateral distance.

8. The method of claim 6 or claim 7, wherein the target nearest offset comprises a distance between the first survey path and a sensor of a sensor array, and wherein the electric current generates a preselected current moment at the distance between the first electrode and the second electrode, wherein the preselected current moment is preferably in the range from 250,000 amp-meters to 5,000,000 amp-meters, and wherein the current is preferably less than or equal to 500 amps.

9. The method of any of claims 6 to 8, wherein the distance between the first and second electrodes is in the range from 1000 meters to 20000 meters (20 kilometers).

10. An apparatus comprising:
an electromagnetic source comprising first and second electrodes, the first and second electrodes separated by a distance therebetween;
and wherein the distance between the first and second electrodes is equal to or greater than a target nearest offset.

11. The apparatus of claim 10, wherein the target nearest offset is in the range from 1000 meters to 20000 meters (20 kilometers).

12. The apparatus of claim 10 or claim 11, wherein the electromagnetic source further comprises a cable mechanically coupled to the first electrode and both mechanically and electrically coupled the second electrode, the cable configured to carry an electric current, the electric current generating a current moment having a preselected value at the distance between the first and second electrodes distance, wherein the preselected value of the current moment is preferably in the range from 500,000 amp-meter to 25,000,000 amp-meter, and wherein the distance between the first and second electrodes is preferably in the range from 1000 meters to 20000 meters (20 kilometers).

13. A method of generating a geophysical data product, the method comprising:
towing an electromagnetic source through a body of water behind a first survey vessel, the electromagnetic source having first and second electrodes separated by a distance therebetween, and the towing over a reservoir beneath a sea floor;
driving a current between the first and second electrodes;
wherein the distance between the first and second electrodes is equal to or greater than a depth of a reservoir beneath the sea floor;
responsive to the driving the current between the first and second electrodes, processing an electromagnetic signal from the hydrocarbon reservoir to generate the geophysical data product;
wherein the processing comprises determining an electric field strength of the electromagnetic signal.

14. The method of claim 13, further comprising recording the geophysical data product on a tangible, non-volatile, computer-readable medium for importing onshore.

15. The method of claim 13, further comprising performing geophysical analysis on the geophysical data product.

16. A marine survey system comprising:
an electromagnetic source comprising a first and a second electrode, wherein the first and second electrode are separated by a length L; and
a sensor array comprising at least one sensor separated from the electromagnetic source by an offset less than length L, wherein the offset is in the range from 1000 meters to 20000 meters (20 kilometers).
